# EUROPEAN PATENT APPLICATION

(11) **EP 4 447 204 A1**
(43) Date of publication of application: **16.10.2024**
(21) Application number: 24159513.1
(22) Date of filing: 23.02.2024
(51) Int. Cl.: H01M 50/107, H01M 50/213, H01M 50/242, H01M 50/284, H01M 50/291, H01M 50/293, H01M 50/296, H01M 50/298, H01M 50/503, H01M 50/533, H01M 50/548, H01M 50/588, H01M 50/593

(54) **RECHARGEABLE BATTERY MODULE**

(30) Priority: 14.04.2023 KR 20230049496
(71) Applicant: Samsung SDI Co., Ltd., Yongin-si, Gyeonggi-do 17084 (KR)
(72) Inventor: PARK, Sanghun, 17084 Yongin-si (KR)
(74) Representative: Marks & Clerk LLP

(57) **Abstract**

A rechargeable battery module includes: a first core pack and a second core pack. Each of the first core pack and the second core pack includes: a first holder and a second holder coupled to each other in a third direction crossing a second direction and configured to accommodate a plurality of battery cells therebetween to be spaced apart in a first direction and the second direction crossing the first direction; a plurality of tabs electrically connecting the battery cells along the first direction and spaced apart from each other in the second direction; and a plurality of bus bars connecting the tabs to a battery management system. The first core pack further includes a rib protruding toward the second core pack and contacting at least one of the bus bars of the second core pack.

## Description

### BACKGROUND

### 1. Field

Aspects of embodiments of the present disclosure relate to a rechargeable battery module.

### 2. Description of the Related Art

A rechargeable battery differs from a primary battery in that it is designed to be repeatedly charged and discharged, while a primary battery is not designed to be recharged. A small rechargeable battery may be used to power portable, small electronic devices, such as a mobile phone, a laptop computer, or a camcorder. A large capacity, high density rechargeable battery may be used to power motor driving of hybrid vehicles and electric vehicles.

A rechargeable battery may be used as a rechargeable battery module including a plurality of battery cells coupled together in series and/or in parallel, for example, to drive a motor of a hybrid vehicle requiring a relatively high energy density. For example, the rechargeable battery module may be formed by connecting electrode terminals of a plurality of battery cells, provided in a number and connected in an arrangement to provide to a desired amount of a power, to each other to implement a relatively high power rechargeable battery module (e.g., for an electric vehicle).

For example, the rechargeable battery module includes a plurality of core packs, and each core pack includes a plurality of battery cells coupled together in series and/or in parallel. The rechargeable battery module is formed by accommodating the core packs in a case. The rechargeable battery module should be especially durable against an external impact when the electrical consumer's usage demands relatively high voltage and current.

When the rechargeable battery module is formed by adjacently disposing a plurality of core packs in a horizontal direction to provide a large capacity module, a cell barrier may be included having the shape of the bus bar to prevent the bus bar from moving away from the corresponding core pack, and the bus bar may be fixed within the cell barrier with a bolt or a screw. However, because space between the core packs is relatively small or narrow, the bolt or the screw may not be able to be used.

### SUMMARY

Embodiments of the present disclosure provide a rechargeable battery module that reduces or minimizes a space necessary to fix adjacent bus bars together when a plurality of core packs are provided.

Embodiments of the present disclosure also provide a rechargeable battery module that secures electrical stability by strengthening the spacing and fixing of bus bars while reducing or minimizing the space between bus bars of adjacent core packs.

In addition, embodiments of the present disclosure provide a rechargeable battery module that firmly fixes an overlapping portion of the tab and the bus bar connecting the battery cells in the core pack.

A rechargeable battery module, according to an embodiment of the present disclosure, includes a first core pack and a second core pack. Each of the first core pack and the second core pack includes: a first holder and a second holder coupled to each other in a third direction crossing a second direction and configured to accommodate a plurality of battery cells therebetween to be spaced apart in a first direction and the second direction crossing the first direction; a plurality of tabs electrically connecting the battery cells along the first direction and spaced apart from each other in the second direction; and a plurality of bus bars connecting the tabs to a battery management system. The first core pack further includes a rib protruding toward the second core pack and contacting at least one of the bus bars of the second core pack.

The tabs may include: a plate tab member in the first core pack electrically connecting the battery cells to each other; and a bent tab member in the second core pack having an inner plane portion connected to the battery cells and an inner side portion bent from the inner plane portion and on an outer side of the second holder.

The bus bars may include a first bus bar member and a second bus bar member. The second bus bar member in the first core pack may have a plane portion spaced apart from the plate tab member and a side portion connected to the plane portion and on the outer side of the second holder, and the first bus bar member in the second core pack may have an outer plane portion facing the inner plane portion of the bent tab member and an exterior side portion bent from the outer plane portion and connected to the inner side portion.

The rib may push the exterior side portion of the first bus bar member of the second core pack.

The rib may be provided in a pair on the second holder of the first core pack, and the ribs may be on opposite sides of the second bus bar member in a width direction thereof and may push the exterior side portion of the first bus bar member.

The second bus bar member may have a vertical portion extending from the side portion in the third direction and a horizontal portion connected to the vertical portion.

The rib may be provided in a pair on the second holder of the first core pack, and the ribs may be on opposite sides of the vertical portion of the second bus bar member in a width direction thereof to align the vertical portion.

The side portion of the second bus bar member may be greater than a height of the sum of the first holder and the second holder of the first core pack, and the exterior side portion of the first bus bar member may be above a bottom of the second holder in the first core pack.

The first bus bar member may extend along the outer side of the second holder of the second core pack from the exterior side portion.

The ribs may support the exterior side portion and the inner side portion stacked against each other.

Each of the first core pack and the second core pack may further include a first line coupling a first group of the battery cells together in parallel, a second line coupling a second group of the battery cells in parallel and in series, and a third line coupling the remaining ones of the battery cells in parallel and in series. The first line, the second line, and the third line may be coupled together in series and connected to the battery management system.

The bus bars may include a first bus bar member and a second bus bar member, and the second bus bar member of the first core pack and the first bus bar member of the second core pack may be adjacent to each other and may have different polarities from each other.

At least some of the above and other features of the invention are set out in the claims.

The rechargeable battery module, according to embodiments of the present disclosure, includes a rib on the first core pack that protrudes toward the second core pack. Because the rib pushes on the bus bar of the second core pack, the space for fixing the adjacent bus bar may be reduced. In addition, in some embodiments, because the rib on the first core pack pushes the bus bar on the second core pack, electrical stability (e.g., electrical isolation) is improved by strengthening a separation between the bus bars.

Also, in some embodiments, the first tab member in the second core pack has an inner plane portion and an inner side portion, the first bus bar member in the second core pack has an outer plane portion connected to the inner plane portion and an exterior side portion connected to the inner side portion. Thus, the rib pushes the exterior side portion of the first bus bar member of the second core pack to firmly fix the overlapping portions of the tab and the bus bar.

### BRIEF DESCRIPTION OF THE DRAWINGS

FIG. 1 is a perspective view of a rechargeable battery module according to an embodiment.
FIG. 2 is a perspective view of a first core pack and a battery management system in the rechargeable battery module shown in FIG. 1.
FIG. 3 is a cross-sectional view taken along the line III-III in FIG. 1.
FIG. 4 is a top plan view showing a series and parallel connection configuration of battery cells in the rechargeable battery module shown in FIG. 1.
FIG. 5 is a perspective view showing a connection configuration between a first core pack, a first tab member, and a first bus bar member in the rechargeable battery module shown in FIG. 1.
FIG. 6 is a top plan view of a first bus bar member of a first core pack and a second bus bar member of a second core pack in the rechargeable battery module shown in FIG. 1.
FIG. 7 is a cross-sectional view taken along the line VII-VII in FIG. 6.

### DETAILED DESCRIPTION

The present disclosure will be described more fully hereinafter with reference to the accompanying drawings, in which embodiments of the present disclosure are shown. As those skilled in the art would realize, the described embodiments may be modified in various different ways, all without departing from the scope of the present disclosure. In other words, the drawings and description are to be regarded as illustrative in nature and not restrictive.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

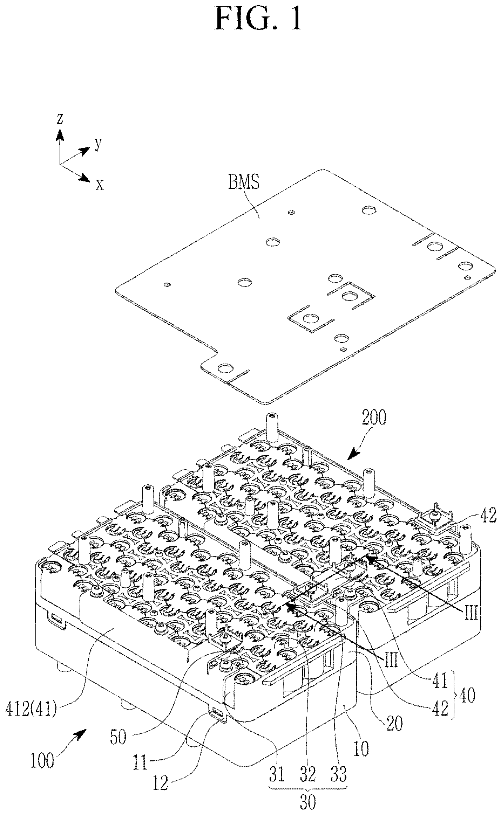

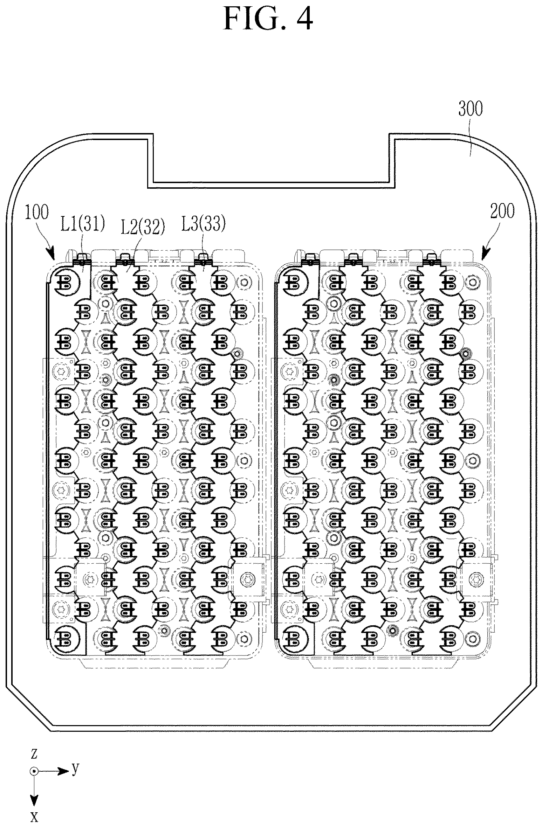

FIG. 1 is a perspective view of a rechargeable battery module according to an embodiment. Referring to FIG. 1, a rechargeable battery module, according to an embodiment of the present disclosure, includes a first core pack 100 and a second core pack 200. The first core pack 100 and the second core pack 200 are accommodated in a case 300 and are disposed (or arranged) adjacent to each other in a second direction (e.g., the y-axis direction) to form the rechargeable battery module (see, e.g., FIG. 4).

Each of the first core pack 100 and the second core pack 200 includes a first holder 10 and a second holder 20, a plurality of tabs 30, and a plurality of bus bars 40. In one embodiment, the first holder 10 forms a bottom holder of the core pack, and the second holder 20 forms a top holder thereof. The tabs 30 may include a nickel material.

The first holder 10 and the second holder 20 form a honeycomb structure therebetween (e.g., together or inside) in which a plurality of battery cells 50 are accommodated to be spaced apart in the first direction (e.g., the x-axis direction) and the second direction (e.g., the y-axis direction) crossing the first direction. The first holder 10 and the second holder 20 are combined with each other in a third direction (e.g., the z-axis direction) crossing the second direction.

In one embodiment, the first holder 10 and the second holder 20 are combined together by a snap fit structure including a protrusion member 11 provided on the outside of the first holder 10 and a coupling member 12 provided on the outside of the second holder 20 and corresponding to the protrusion member 11.

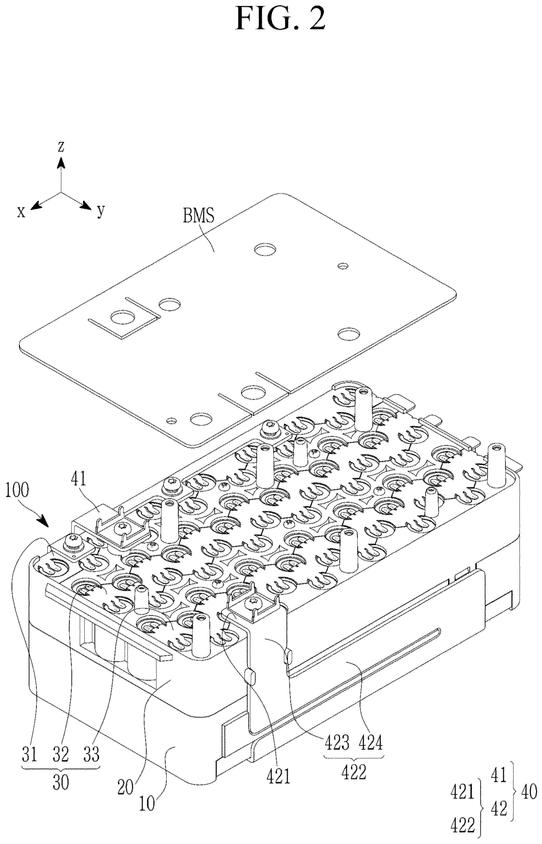

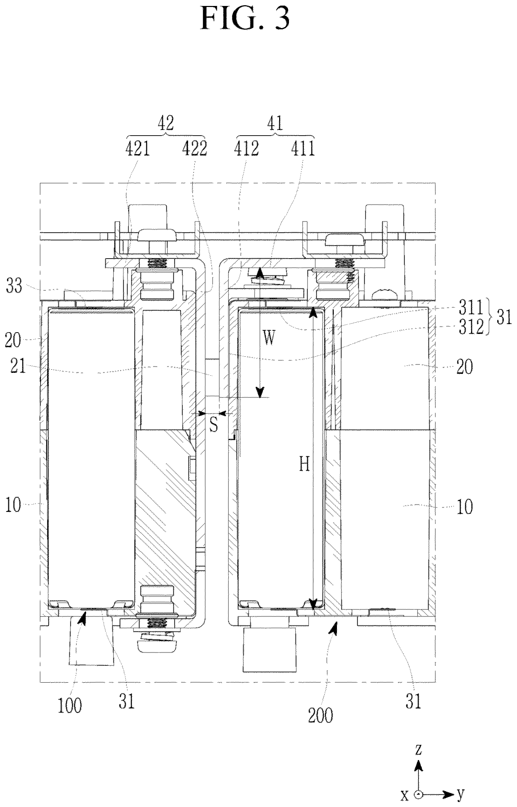

FIG. 2 is a perspective view of the first core pack 100 and a battery management system BMS in the rechargeable battery module shown in FIG. 1 in a disassembled state. FIG. 3 is a cross-sectional view taken along the line III-III in FIG. 1. FIG. 4 is a top plan view showing the series and parallel connection configuration of the battery cells 50 shown in FIG. 1.

Referring to FIG. 1 to FIG. 4, the tabs 30 connecting the battery cells 50 together in series and in parallel include a first tab member 31, a second tab member 32, and a third tab member 33.

The first tab member 31, the second tab member 32, and the third tab member 33 electrically connect the battery cells 50 in parallel and in series along the first direction (e.g., the x-axis direction) and are spaced apart in the second direction (e.g., the y-axis direction).

The first tab member 31, the second tab member 32, and the third tab member 33 are sequentially provided on (or sequentially arranged on) the second holder 20 in the second direction, and another group of tabs 30 are sequentially provided under (e.g., on the bottom of) the first holder 10 in the reverse direction of the second direction to form a symmetrical structure with the first tab member 31, the second tab member 32, and the third tab member 33, thereby electrically connecting the battery cells 50 in parallel and in series.

For convenience, the tabs 30 will be described based on their arrangement on the second holder 20. The first tab member 31 electrically connects some of the plurality of battery cells 50 in parallel and in series along the first direction, the second tab member 32 electrically connects others of the plurality of battery cells 50 in parallel and in series along the first direction, and the third tab member 33 electrically connects the remaining ones of the plurality of battery cells 50 in parallel and in series along the first direction.

Each of the first core pack 100 and the second core pack 200 includes a first line L1 (see, e.g., FIG. 4) coupling some of the plurality of battery cells 50 from among the entire plurality of battery cells 50 in parallel, a second line L2 coupling others of the plurality of battery cells 50 in parallel and in series, and a third line L3 coupling the remaining ones of the plurality of battery cells 50 in parallel and in series. The first line L1 is may correspond to the first tab member 31, the second line L2 may correspond to the second tab member 32, and the third line L3 may correspond to the third tab member 33.

The first line L1 to the third line L3, that is, the first tab member 31 to the third tab member 33, are coupled together in series and connected to a battery management system (BMS) through first and second bus bar members 41 and 42 of the plurality of bus bars 40.

The second bus bar member 42 of the first core pack 100 and the first bus bar member 41 of the second core pack 200, which are adjacent to each other, are respectively disposed in the first core pack 100 and the second core pack 200 and have different polarities. Therefore, the second bus bar member 42 and the first bus bar member 41, which are adjacent in the second direction, should be electrically separated.

The first tab member 31 is disposed on the outermost area of the first and second holders 10 and 20 in the second direction and is formed as a bent tab member. The second tab member 32 and the third tab member 33 are disposed inside the first and second holders 10 and 20 and may be formed as a plate tab member that connects the battery cells 50 to each other.

The first tab member 31, which is the bent tab member, has an inner plane portion 311 connected to the battery cells 50 and an inner side portion 312 bent from the inner plane portion 311 and disposed on the side surface of the first and second holders 10 and 20.

The bus bars 40 includes a first bus bar member 41 and a second bus bar member 42. The first and second core packs 100 and 200 each have the first and second bus bar members 41 and 42. Referring to FIG. 3, the first bus bar member 41 in the second core pack 200 is connected to the first tab member 31, which is the bent tab member, on the second holder 20 at one side and connected to the battery management system (BMS) at the other side.

The first bus bar member 41 has an outer plane portion 411 and an exterior side portion 412. The outer plane portion 411 faces the inner plane portion 311 of the first tab member 31, and the exterior side portion 412 is bent at the outer plane portion 411 and connected to the inner side portion 312 of the first tab member 31. The outer plane portion 411 of the first bus bar member 41 is connected to the battery management system (BMS).

The second bus bar member 42 in the first core pack 100 is connected to the first tab member 31 under the first holder 10 at one side, extends to the upper side of the second holder 20, and is connected to the battery management system (BMS) at the other side.

The second bus bar member 42 has a plane portion 421 and a side portion 422. The plane portion 421 is spaced apart from the second tab member 32, which is the plate tab member, and the side portion 422 is bent from and connected to the plane portion 421 and disposed on the side of the second and first holders 20 and 10. The plane portion 421 of the second bus bar member 42 is connected to the battery management system (BMS).

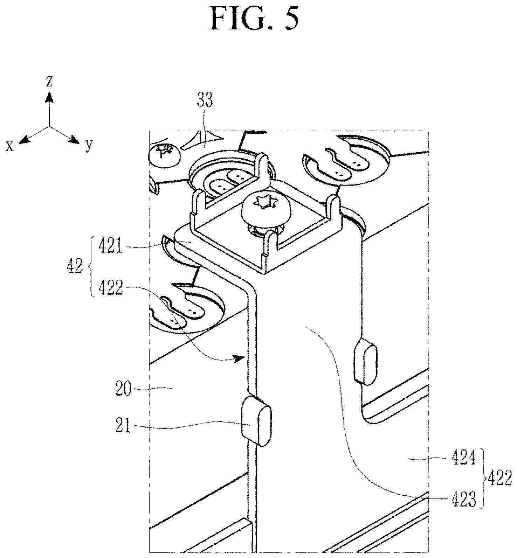

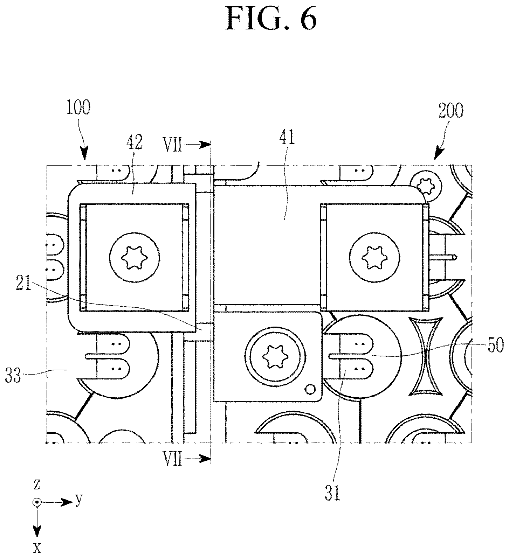

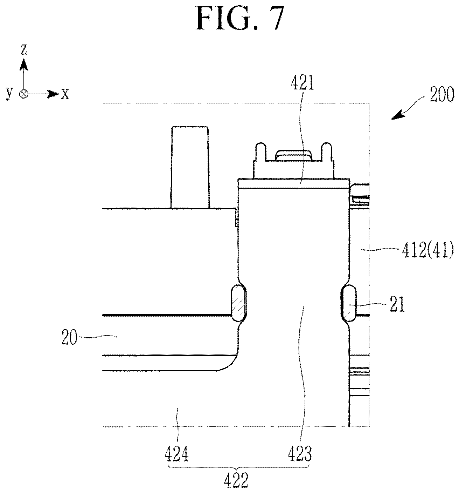

FIG. 5 is a perspective view showing a first core pack, a first tab member, and a first bus bar member shown in FIG. 1. FIG. 6 is a top plan view of a first bus bar member of a first core pack and a second bus bar member of a second core pack shown in FIG. 1. FIG. 7 is a cross-sectional view taken along the line VII-VII in FIG. 6.

Referring to FIG. 3 to FIG. 7, the first core pack 100 has a rib 21 protruding toward the second core pack 200, and the rib 21 pushes (e.g., aligns) the bus bar 40 of the second core pack 200. The rib 21 pushes the exterior side portion 412 of the first bus bar member 41 of the second core pack 200.

In one embodiment, the rib 21 is provided in pairs on the second holder 20 of the first core pack 100 and the ribs 21, formed in pairs, are provided on both sides of the second bus bar member 42 in the width direction thereof to push (e.g., to align) the exterior side portion 412 of the first bus bar member 41. Referring to FIG. 1, the exterior side portion 412 is formed long in (e.g., is elongated in or has the greatest dimension in) the first direction (e.g., the x-axis direction) on the outside of the second holder 20 and along the inner side portion 312.

Therefore, the ribs 21, formed in pairs, firmly push the exterior side portion 412 of the first bus bar member 41, thereby minimizing the space S for fixing the adjacent first and second bus bar members 41 and 42 (see, e.g., FIG. 3). For example, the first and second bus bar members 41 and 42 are securely separated by the ribs 21 and an electrical stability therebetween may be secured.

Because the rib 21 pushes the exterior side portion 412 of the first bus bar member 41 of the second core pack 200, the overlapping portion of the inner side portion 312 of the first tab member 31 with the exterior side portion 412 of the first bus bar member 41 may be firmly fixed (e.g., may firmly contact each other).

The second bus bar member 42 has a vertical portion 423 extending from the side portion 422 in the coupling direction of the first holder 10 and the second holder 20 of the first core pack 100 (e.g., in the z-axis direction) and a horizontal portion 424 connected to the vertical portion 423. The horizontal portion 424 responds to and absorbs vibration and/or external impacts, such that the electrical connection structure of the second bus bar member 42 may be stabilized.

The rib 21 is provided in pairs on the second holder 20 of the first core pack 100 and is disposed on both sides of the vertical portion 423 of the second bus bar member 42 in the width direction thereof, thereby holding (e.g., aligning) the vertical portion 423. The vertical portion 423 may have a coupling groove into which the rib 21 is coupled with an interference fit (see, e.g., FIG. 7). Therefore, the vertical portion 423 may remain firmly in contact with the side surface of the second holder 20.

The side portion 422 of the second bus bar member 42 (e.g., the overall height of the side portion 422 of the second bus bar member 42) is greater than the height H of the sum of the first holder 10 and the second holder 20 of the first core pack 100. The exterior side portion 412 of the first bus bar member 41 has a width W in the third direction, and is higher than the height of the second holder 20 of the second core pack 200. For example, the lower end of the exterior side portion 412 is positioned higher than (e.g., is above) the lowermost end of the second holder 20 of the second core pack 200. The exterior side portion 412 of the first bus bar member 41 extends along the side of the second holder 20 of the second core pack 200. Therefore, the exterior side portion 412 is pressed by the rib 21 and may be supported by the second holder 20 of the second core pack 200.

Because the rib 21 supports the stacked exterior side portion 412 and the inner side portion 312, the exterior side portion 412 and the inner side portion 312 may be firmly supported by the second holder 20 of the second core pack 200.

Although embodiments of the present disclosure is described in the above description, the present disclosure is not limited thereto. Various modifications can be made to these embodiments and the present disclosure generally within the scope of the present disclosure, which is defined by the appended claims and their equivalents.

**Description of Some Reference Symbols**

| | | | |
|---|---|---|---|
| 10: | first holder | 11: | protrusion member |
| 12: | coupling member | 20: | second holder |
| 21: | rib(rib) | 30: | tab |
| 31: | first tab member | 32, 33: | second, third tab member |
| 40: | bus bar | 41, 42: | first, second bus bar member |
| 50: | battery cell | 100: | first core pack |
| 200: | second core pack | 311: | inner plane portion |
| 312: | inner side portion | 411: | outer plane portion |
| 412: | exterior side portion | 421: | plane portion |
| 422: | side portion | 423: | vertical portion |
| 424: | horizontal portion | BMS: | battery management system |
| H: | sum height | S: | space |

## Claims

1. A rechargeable battery module comprising:
a first core pack and a second core pack, each of the first core pack and the second core pack comprising:
a first holder and a second holder coupled to each other in a third direction crossing a second direction and configured to accommodate a plurality of battery cells therebetween to be spaced apart in a first direction and the second direction crossing the first direction;
a plurality of tabs electrically connecting the battery cells along the first direction and spaced apart from each other in the second direction; and
a plurality of bus bars connecting the tabs to a battery management system,
wherein the first core pack further comprises a rib protruding toward the second core pack and contacting at least one of the bus bars of the second core pack.

2. The rechargeable battery module as claimed in claim 1, wherein the tabs comprise:
a plate tab member in the first core pack electrically connecting the battery cells to each other; and
a bent tab member in the second core pack having an inner plane portion connected to the battery cells and an inner side portion bent from the inner plane portion and on an outer side of the second holder.

3. The rechargeable battery module as claimed in claim 2, wherein the bus bars comprise a first bus bar member and a second bus bar member,
wherein the second bus bar member in the first core pack has a plane portion spaced apart from the plate tab member and a side portion connected to the plane portion and on the outer side of the second holder, and
wherein the first bus bar member in the second core pack has an outer plane portion facing the inner plane portion of the bent tab member and an exterior side portion bent from the outer plane portion and connected to the inner side portion.

4. The rechargeable battery module as claimed in claim 3, wherein the rib pushes the exterior side portion of the first bus bar member of the second core pack.

5. The rechargeable battery module as claimed in claim 4, wherein the rib is provided in a pair on the second holder of the first core pack, and
wherein the ribs are on opposite sides of the second bus bar member in a width direction thereof and push the exterior side portion of the first bus bar member.

6. The rechargeable battery module as claimed in claim 4, wherein the second bus bar member has a vertical portion extending from the side portion in the third direction and a horizontal portion connected to the vertical portion.

7. The rechargeable battery module as claimed in claim 6, wherein the rib is provided in a pair on the second holder of the first core pack, and
wherein the ribs are on opposite sides of the vertical portion of the second bus bar member in a width direction thereof to align the vertical portion.

8. The rechargeable battery module as claimed in claim 6 or claim 7,
wherein the side portion of the second bus bar member is greater than a height of the sum of the first holder and the second holder of the first core pack, and
wherein the exterior side portion of the first bus bar member is above a bottom of the second holder in the first core pack.

9. The rechargeable battery module as claimed in claim 7 or claim 8,
wherein the first bus bar member extends along the outer side of the second holder of the second core pack from the exterior side portion.

10. The rechargeable battery module as claimed in claim 9, wherein the ribs support the exterior side portion and the inner side portion stacked against each other.

11. The rechargeable battery module as claimed in claim 1, wherein each of the first core pack and the second core pack further comprises a first line coupling a first group of the battery cells together in parallel, a second line coupling a second group of the battery cells in parallel and in series, and a third line coupling the remaining ones of the battery cells in parallel and in series, and
wherein the first line, the second line, and the third line are coupled together in series and connected to the battery management system.

12. The rechargeable battery module as claimed in claim 11, wherein the bus bars comprise a first bus bar member and a second bus bar member, and
wherein the second bus bar member of the first core pack and the first bus bar member of the second core pack are adjacent to each other and have different polarities from each other.
